(19) Europäisches Patentamt
European Patent Office
Office européen des brevets

(11) EP 3 147 305 A1

(12) EUROPEAN PATENT APPLICATION
published in accordance with Art. 153(4) EPC

(43) Date of publication:
**29.03.2017 Bulletin 2017/13**

(21) Application number: **14892470.7**

(22) Date of filing: **03.12.2014**

(51) Int Cl.:
*C08G 69/02* (2006.01) *C08G 69/26* (2006.01)
*C08G 69/04* (2006.01) *C08G 69/48* (2006.01)

(86) International application number:
**PCT/KR2014/011779**

(87) International publication number:
**WO 2015/178560 (26.11.2015 Gazette 2015/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **23.05.2014 KR 20140062521**
**02.12.2014 KR 20140170879**

(71) Applicant: **Lotte Advanced Materials Co., Ltd.**
**Yeosu-si Jeollanam-do 59616 (KR)**

(72) Inventors:
- **IM, Sang Kyun**
  **Uiwang-si**
  **Gyeonggi-do 437-711 (KR)**
- **BAE, Shin Hyo**
  **Uiwang-si**
  **Gyeonggi-do 437-711 (KR)**
- **KWON, So Young**
  **Uiwang-si**
  **Gyeonggi-do 437-711 (KR)**
- **PARK, Tae Joon**
  **Uiwang-si**
  **Gyeonggi-do 437-711 (KR)**
- **KIM, Joon Sung**
  **Uiwang-si**
  **Gyeonggi-do 437-711 (KR)**
- **KIM, Jin Kyu**
  **Uiwang-si**
  **Gyeonggi-do 437-711 (KR)**
- **JIN, Young Sub**
  **Uiwang-si**
  **Gyeonggi-do 437-711 (KR)**

(74) Representative: **Michalski Hüttermann & Partner**
**Patentanwälte mbB**
**Speditionstraße 21**
**40221 Düsseldorf (DE)**

# (54) COPOLYMERIZED POLYAMIDE RESIN, METHOD FOR PREPARING SAME, AND MOLDED PRODUCT COMPRISING SAME

(57) A copolymerized polyamide resin according to the present invention is characterized by comprising: a repeat unit derived from a dicarboxylic acid; a repeat unit derived from a diamine; and a repeat unit represented by Formula 1, wherein the copolymerized polyamide resin has a melting point ($T_m$) of about 280°C to about 330°C. The copolymerized polyamide resin has excellent heat resistance and melt-process ability.

EP 3 147 305 A1

## Description

[Technical Field]

The present invention relates to a copolymerized polyamide resin, a method for preparing the same, and a product including the same, and more particularly, to a highly heat-resistant crystalline copolymerized polyamide resin which has excellent heat resistance and melt processability, a method for preparing the same, and a molded product including the same.

[Background Art]

Highly heat resistant nylon can be obtained through polycondensation of aromatic dicarboxylic acids or aromatic diamines. Such a highly heat resistant nylon product may have a semi-aromatic structure and a semi-crystalline structure,and can withstand much higher temperature than typical nylon products, thus being applied to various fields requiring high heat-resistance properties. Properties of the highly heat resistant nylon, such as heat resistance and flowability, can vary depending upon comonomers and copolymerization ratio.

Examples of highly heat resistant nylon generally used in the art include PA4T, PA6T, PA9T, PA10T, PA11T, and PA12T. Generally, in preparation of PA4T, PA6T, and the like, which contain a linear alkylene group with low carbon number in a backbone, a large amount (several dozen %) of comonomer is used to improve melt processability instead of using a homopolymer, which has high melting point and poor processability. Examples of the comonomer generally used in the art include adipic acid, isophthalic acid, and the like, specifically short chain or long chain aliphatic diamines, cyclic aliphatic diamines, branched aliphatic diamines, short chain or long chain aliphatic dicarboxylic acids, cyclic aliphatic dicarboxylic acids, and branched aliphatic dicarboxylic acids. Particularly, adipicacid has the same carbon number as terephthalic acid and thus can lower melting point without reduction in crystallinity.

However, when a dicarboxylic acid including a linear aliphatic dicarboxylic acid such as adipic acid is used, a highly heat resistant nylon can be decomposed through cyclization at high temperature, which is a mechanism known in the art (see Archamer BG, Reinhard FW and Kline GM, J Res Natl Bur Stand 4:391(1951)). Upon decomposition of the highly heat resistant nylon, gases such as water vapor, CO, $CO_2$, and $NH_3$ can be generated, causing blistering in some subsequent processes after injection molding.

Therefore, there is a need for a highly heat-resistant crystalline copolymerized polyamide resin which can exhibit excellent melt processability and heat resistance without suffering from decomposition.

[Disclosure]

[Technical Problem]

It is one aspect of the present invention to provide a highly heat-resistant crystalline copolymerized polyamide resin which can exhibit excellent heat resistance and melt processability, and a method for preparing the same.

It is another aspect of the present invention to provide a copolymerized polyamide resin which can reduce or prevent gas generation during high-temperature processing and exhibit improved discoloration resistance, and a method for preparing the same.

It is a further aspect of the present invention to provide a molded product formed of the copolymerized polyamide resin as set forth above.

The above and other aspects of the present invention will become apparent from the detailed description of the following embodiments.

[Technical Solution]

One aspect of the present invention relates to a copolymerized polyamide resin. The copolymerized polyamide resin includes: a repeat unit derived from a dicarboxylic acid; a repeat unit derived from a diamine; and a repeat unit represented by Formula 1, wherein the copolymerized polyamide resin has a melting point ($T_m$) of about 280°C to about 330°C:

[Formula 1]

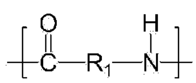

wherein $R_1$ is a $C_3$ to $C_{12}$ linear, branched, or cyclic alkylene group.

In one embodiment, the repeat unit represented by Formula 1 may be derived from a cyclic amide compound represented by Formula 2 or an amino acid compound represented by Formula 3:

[Formula 2]

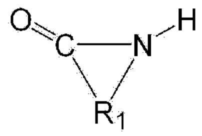

[Formula 3]

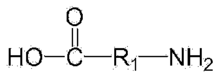

wherein $R_1$ is the same as defined in Formula 1.

In one embodiment, the dicarboxylic acid may include at least one $C_8$ to $C_{20}$ aromatic dicarboxylic acid.

In one embodiment, the dicarboxylic acid may include about 60 mol% to about 100 mol% of the aromatic dicarboxylic acid and about 40 mol% or less of a $C_6$ to $C_{20}$ aliphatic dicarboxylic acid.

In one embodiment, the diamine may include at least one $C_4$ to $C_{20}$ aliphatic diamine.

In one embodiments, the repeat unit represented by Formula 1 may be present in an amount of about 5 parts by mole to about 40 parts by mole based on about 100 parts by mole of the repeat unit derived from the dicarboxylic acid and the repeat unit derived from the diamine, and a mole ratio of the repeat unit derived from the diamine to the repeat unit derived from the dicarboxylic acid (diamine/dicarboxylic acid) may range from about 0.95 to about 1.15.

In one embodiment, the copolymerized polyamide resin may be end-capped with an end-capping agentincluding at least one of an aliphatic carboxylic acid and an aromatic carboxylic acid.

In one embodiment, the copolymerized polyamide resin may have a crystallization temperature ($T_c$) of about 240°C to about 300°C and a glass transition temperature (Tg) of about 70°C to about 120°C.

In one embodiment, the copolymerized polyamide resin may have an intrinsic viscosity of about 0.5 dL/g to about 2.5 dL/g.

In one embodiment, the copolymerized polyamide resin may have a gas generation amount (weight reduction amount)of about 8 wt% or less, as measured after being heated at about 120°C to about 350°C for about 30 minutes, and a moisture absorption rate of about 3% or less, as calculated according to Equation 1:

[Equation 1]

$$\text{Moisture absorption rate (\%)} = (\,|W_1 - W_0|\,/W_0) \times 100$$

wherein $W_0$ is an initial weight of a specimen, and $W_1$ is a weight of the specimen after the specimen is treated at about 85°C/85% RH for about 24 hours.

Another aspect of the present invention relates to a method for preparing a copolymerized polyamide resin. The method includes: polymerizing a monomer mixture including a dicarboxylic acid, a diamine, and a cyclic amide compound represented by Formula 2 or an amino acid compound represented by Formula 3, wherein the copolymerized polyamide resin has a melting point ($T_m$) of about 280°C to about 330°C.

In one embodiment, the method may include: preparing a prepolymer by polymerizing the monomer mixture; and solid-state polymerizing the prepolymer.

In one embodiment, the prepolymer may have an intrinsic viscosity of about 0.1 dL/g to about 0.3 dL/g.

In one embodiment, solid-state polymerization of the prepolymer may include heating the prepolymer to a temperature of about 150°C to about 280°C.

A further aspect of the present invention relates to a molded product formed of the copolymerized polyamide resin as set forth above.

[Advantageous Effects]

Embodiments of the present invention can provide a highly heat-resistant crystalline copolymerized polyamide resin which can exhibit excellent heat resistance and melt processability, reduce or prevent gas generation during high-temperature processing, and have low moisture absorption, a method for preparing the same, and a molded product including the same.

[Best Mode]

Hereinafter, embodiments of the present invention will be described in detail.

A copolymerized polyamide resin according to the present invention includes: (A) a repeat unit derived from a dicarboxylic acid; (B) a repeat unit derived from a diamine; and (C) a repeat unit represented by Formula 1, wherein the copolymerized polyamide resin has a melting point ($T_m$) of about 280°C to about 330°C.

[Formula 1]

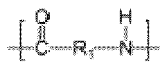

wherein $R_1$ is a $C_3$ to $C_{12}$ linear, branched, or cyclic alkylene group.

As used herein, the term "dicarboxylic acid" includes dicarboxylic acids, alkyl esters thereof ($C_1$ to $C_4$ lower alkyl esters such as monomethyl, monoethyl, dimethyl, diethyl, or dibutyl esters), and acid anhydrides thereof, and the dicarboxylic acid is reacted with a diamine and a cyclic amide compound or an amino acid compound to form the repeat unit derived from the dicarboxylic acid (dicarboxylic acid moiety). In addition, as used herein, the terms "dicarboxylic acid moiety", "the repeat unit derived from a diamine (diamine moiety)", and "repeat unit represented by Formula 1" refer to a residue remaining after removal of a hydroxyl group or an alkoxy group (from a carboxylic acid group), a residue remaining after removal of a hydrogen atom (from an amine group), and a ring-opened cyclic amide moiety or a residue remaining after removal of a hydrogen atom (from an amine group) upon polymerization of the dicarboxylic acid, the diamine, and the amino acid compound, respectively.

(A) Repeat unit derived from dicarboxylic acid

The repeat unit derived from a dicarboxylic acid according to one embodiment of the invention is a residue remaining after removal of a hydroxyl group or an alkoxy group from a carboxylic acid group of the dicarboxylic acid. For example, the repeat unit may be represented by Formula 4.

[Formula 4]

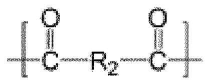

wherein $R_2$ is the remainder of the dicarboxylic acid excluding thecarboxylic acid group. For example, $R_2$ may be a $C_4$ to $C_{30}$ hydrocarbon group or a $C_4$ to $C_{30}$ hydrocarbon group containing a heteroatom such as an oxygen atom and a sulfur atom, specifically a $C_4$ to $C_{18}$ linear, branched, or cyclic alkylene group, a $C_6$ to $C_{18}$ arylene group, a $C_4$ to $C_{18}$ linear, branched, or cyclic alkylene group containing a heteroatom, or a $C_6$ to $C_{18}$ arylene groupcontaining a heteroatom.

In some embodiments, the dicarboxylic acid may include any typical dicarboxylic acid used in a polyamide resin without limitation. For example, the dicarboxylic acid may include an aromatic dicarboxylic acid.

In some embodiments, the aromatic dicarboxylic acid may be a compound including at least one $C_8$ to $C_{20}$ aromatic dicarboxylic acid, for example, terephthalic acid, isophthalic acid, 2,6-naphthalene dicarboxylic acid, 2,7-naphthalene dicarboxylic acid, 1,4-naphthalene dicarboxylic acid, 1,4-phenylene dioxyphenylene acid, 1,3-phenylene dioxydiacetic acid, diphenic acid, 4,4'-oxybis(benzoic acid), diphenylmethane-4,4'-dicarboxylic acid, diphenylsulfone-4,4'-dicarboxylic acid, 4,4'-diphenylcarboxylic acid, and a mixture thereof, without being limited thereto. Specifically, the aromatic dicarboxylic acid may be terephthalic acid, isophthalic acid, or a mixture thereof.

The aromatic dicarboxylic acid may be present in an amount of about 60 mol% to about 100 mol%, for example, about 60 mol% to about 90 mol%, specifically about 60 mol% to about 75 mol% in the dicarboxylic acid. Within this range, the copolymerized polyamide resin can exhibit excellent properties in terms of heat resistance and crystallinity.

In addition, the dicarboxylic acid according to the present invention may further include an aliphatic dicarboxylic acid so as to further improve processability of the copolymerized polyamide resin. The aliphatic dicarboxylic acid may include a $C_6$ to $C_{12}$ linear, branched, or cyclic aliphatic dicarboxylic acid, for example, adipic acid, 1,4-cyclohexane dicarboxylic acid, and 1,3-cyclohexane dicarboxylic acid, without being limited thereto. The aliphatic dicarboxylic acid may be optionally present in an amount of about 40 mol% or less, for example, about 10 mol% to about 40 mol%, specifically about 25 mol% to about 40 mol% in the dicarboxylic acid. Within this range, it is possible to reduce or prevent gas generation during high-temperature processing of a polyamide resin with the aliphatic dicarboxylic acid and to obtain a copolymerized polyamide resin having better processability.

(B) Repeat unit derived from diamine

The repeat unit derived from a diamine according to one embodiment of the present invention is a residue remaining after removal of a hydrogen atom from an amine group of the diamine. For example, the repeat unit may be represented by Formula 5.

[Formula 5]

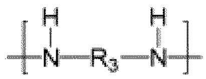

wherein $R_3$ is the remainder of the diamine excluding an amine group. For example, $R_3$ may be a $C_4$ to $C_{30}$ hydrocarbon group or a $C_4$ to $C_{30}$ hydrocarbon group containing a heteroatom such as an oxygen atom and a sulfur atom, specifically a $C_4$ to $C_{20}$ linear, branched, or cyclic alkylene group, a $C_6$ to $C_{30}$ arylene group, a $C_4$ to $C_{20}$ linear, branched, or cyclic alkylene group containing a heteroatom, or a $C_6$ to $C_{30}$ arylene group containing a heteroatom.

In some embodiments, the diamine may include any typical diamine used in a polyamide resin, without limitation. For example, the diamine may include an aliphatic diamine.

In some embodiments, the aliphatic diamine may include at least one $C_4$ to $C_{20}$ aliphatic diamine. For example, the aliphatic diamine may include a linear or branched aliphatic diamine such as 1,4-butane diamine, 1,6-hexane diamine(hexamethylene diamine(HMDA)), 1,7-heptane diamine, 1,8-octane diamine, 1,10-decane diamine(DDA), 1,12-dodecane diamine(DDDA), 3-methyl-1,5-pentane diamine, 2,2,4-trimethyl-1,6-hexane diamine, 2,4,4-trimethyl-1,6-hexane diamine, 5-methyl-1,9-nonane diamine, 2,2-oxybis(ethylamine), bis(3-aminopropyl)ether, ethylene glycol bis(3-aminopropyl)ether (EGBA), 1,7-diamino-3,5-dioxoheptane, and a mixture thereof, without being limited thereto.

In some embodiments, the aliphatic diamine may be a mixture of a $C_4$ to $C_{10}$ aliphatic diamine and a $C_{11}$ to $C_{20}$ aliphatic diamine, without being limited thereto. In this case, the $C_4$ to $C_{10}$ aliphatic diamine may be present in an amount of about 1 mol% to about 99 mol%, for example about 50 mol% to about 95 mol%, specifically about 85 mol% to about 95 mol% in the aliphatic diamine. The $C_{11}$ to $C_{20}$ aliphatic diamine may be present in an amount of about 1 mol% to about 99 mol%, for example, about 5 mol% to about 50 mol%, specifically about 5 mol% to about 15 mol% in the aliphatic diamine. Within this range, the copolymerized polyamide resin can exhibit excellent properties in terms of heat resistance and moisture absorption and have low gas generation during high-temperature processing.

The aliphatic diamine may be present in an amount of about 70 mol% to about 100 mol%, for example, about 85 mol% to about 99 mol% in the diamine. Within this range, the copolymerized polyamide resin can exhibit excellent properties in terms of melt processability, dimensional stability, and heat resistance such as glass transition temperature.

In addition, the diamine(B) of the present invention may further include an aromatic diamine and/or a cyclic aliphatic diamine so as to improve heat resistance and crystallinity of the copolymerized polyamide resin.

The aromatic diamine may include at least one $C_6$ to $C_{30}$ aromatic diamine. Examples of the aromatic diamine may include a phenylene diamine compound such as m-phenylene diamine, p-phenylene diamine, a xylene diamine compound such as m-xylene diamine and p-xylene diamine, and a naphthalene diamine compound, without being limited thereto.

The cyclic aliphatic diamine may include at least one of $C_6$to $C_{30}$cyclic aliphatic diamines. Examples of the cyclic aliphatic diamine may include bis(p-amino-cyclohexyl)methane (PACM) and bis(p-amino-3-methyl-cyclohexyl)methane (MACM), without being limited thereto.

In some embodiments, when the aromatic diamine and/or the cyclic aliphatic diamine are used, the aromatic diamine and/or the cyclic aliphatic diamine may be present in an amount of about 30 mol% or less, for example, about 1 mol% to about 15 mol% in the diamine. Within this range, the copolymerized polyamide resin can exhibit excellent properties in terms of heat resistance and chemical resistance.

In the copolymerized polyamide resin according to the present invention, a mole ratio of the (B) repeat unit derived from the dicarboxylic acidto the (A) repeat unit derived from the dicarboxylic acid (diamine (B)/dicarboxylic acid

(A)) may range, for example, from about 0.95 toabout 1.15, for example, fromabout 1.00 toabout 1.10. Within this range, it is possible to prepare a polymer having a degree of polymerization suitable for molding and to prevent property deterioration due to unreacted monomers.

(C) Repeat unit represented by Formula 1

The repeat unit represented by Formula 1 is a ring-opened cyclic amide compound moiety or a residue remaining after a hydrogen atom is removed from an amine group of an amino acid compound and a hydroxyl group or an alkoxy group is removed from a carboxylic acid group of the amino acid compound.
In some embodiments, the cyclic amide (lactam) compound and the amino acid compound can replace or be used together with the aliphatic dicarboxylic acid, which is used to improve melt processability, and serve to sharply reduce a melting point of the copolymerized polyamide resin, thereby increasing the content of an aromatic dicarboxylic acid moiety in a dicarboxylic acidmoiety. Thus, the copolymerized polyamide according to the present invention including the ring-opened cyclic amide compound or the polycondensed amino acid compound has better heat resistance and crystallinity than a typical copolymerized polyamide resin having the same level of melt processability as the copolymerized polyamide resin according to the present invention and can reduce or prevent gas generation due to the aliphatic dicarboxylic acid moiety during high-temperature processing.
In some embodiments, the cyclic amide compound may include a typical $C_4$ to $C_{12}$ cyclic amide compound, for example, a cyclic amide compound represented by Formula 2.

[Formula 2]

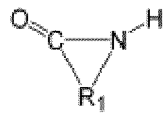

wherein $R_1$ is a $C_3$ to $C_{12}$ linear, branched, or cyclic alkylene group, for example a $C_4$ to $C_{12}$ linear alkylene group.
Examples of the cyclic amide compound may include ε-caprolactam, laurolactam, and a mixture thereof, without being limited thereto.
In some embodiments, the amino acid compound may include a typical $C_4$ to $C_{12}$ amino acid, for example, an amino acid compound represented by Formula 3.

[Formula 3]

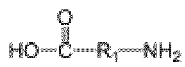

wherein $R_1$ is a $C_3$ to $C_{12}$ linear, branched, or cyclic alkylene group, for example, a $C_4$ to $C_{12}$ linear alkylene group.
Examples of the amino acid compound may include 5-aminopentanoic acid, 12-aminododecanoic acid, and a mixture thereof, without being limited thereto.
In the copolymerized polyamide resin according to the invention, the repeat unit represented by Formula 1 (cyclic amide compound or amino acid compound) may be present in an amount of about 5 parts by mole to about 40 parts by mole, for example, about 10 parts by mole to about 35 parts by mole, based on about 100 parts by mole of the dicarboxylic acid and the diamine. Within this range, the copolymerized polyamide resin can exhibit excellent properties in terms of melt processability, heat resistance, crystallinity, and balance therebetween.
The copolymerized polyamide resin may be end-capped with an end-capping agent including at least one of an aliphatic carboxylic acid and an aromatic carboxylic acid. Examples of the end-capping agent may include acetic acid, propionic acid, butyric acid, valeric acid, caproic acid, caprylic acid, lauric acid, tridecylic acid, myristic acid, palmitic acid, stearic acid, pivalic acid, isobutyric acid, benzoic acid, toluic acid, α-naphthalene carboxylic acid, β-naphthalene carboxylic acid, methylnaphthalene carboxylic acid, and a mixture thereof, without being limited thereto.
The end-capping agent may be present in an amount of about 0.01 parts by mole to about 3 parts by mole, for example, about 0.1 parts by mole to about 2 parts by mole based on about 100 parts by mole of the dicarboxylic acid(A) and the diamine(B), without being limited thereto.
The copolymerized polyamide resin according to the present invention may be prepared by a typical polyamide preparation method and may be prepared, for example, by polymerization of a monomer mixture including the dicarboxylic acid, the diamine, and the cyclic amide compound or the amino acid compound.

Here, the polymerization may be performed by any typical polymerization method known in the art, for example, melt polymerization at a polymerization temperature of about 80°C to about 300°C, for example, about 90°C to about 280°C at a polymerization pressure of about 10 kgf/cm$^2$ to about 40 kgf/cm$^2$, without being limited thereto.

In some embodiments, the copolymerized polyamide resin may be prepared by polymerizing the monomer mixture to prepare a prepolymer, followed by solid-state polymerization of the prepolymer. For example, the copolymerized polyamide resin may be prepared by a process in which a reactor is filled with the monomer mixture, a catalyst, and water, followed by stirring the mixed solution at about 80°C to about 150°C for about 0.5 to 2 hours, and the solution is maintained at about 200°C to about 280°C and at about 20 kgf/cm$^2$ to about 40 kgf/cm$^2$ for about 2 to 4 hours, followed by reaction (copolymerization) at a reduced pressure of about 10 kgf/cm$^2$ to about 30 kgf/cm$^2$ for about 1 to 3 hours to obtain a prepolymer and solid-state polymerization of the prepolymer under a vacuum at a temperature between the glass transition temperature (Tg) and the melting point ($T_m$) of the prepolymer for about 5 to 30 hours.

The prepolymer may have an intrinsic viscosity (η) of about 0.1 dL/g to about 0.3 dL/g, for example, about 0.15 dL/g to about 0.25 dL/g, as measured at 25°C using an Ubbelohde viscometer after being dissolved in an about 98% sulfuric acid solution to a concentration of about 0.5 g/dl. Within this range, the copolymerized polyamide resin can have excellent melt processability.

In some embodiments, solid-state polymerization may be performed by heating the prepolymer to a temperature of about 150°C to about 280°C, for example, about 180°C to about 250°C, under a vacuum or in the presence of an inert gas such as nitrogen gas and argon gas. Within this range, it is possible to obtain a copolymerized polyamide resin having a weight average molecular weight of about 5,000 g/mol to about 50,000 g/mol.

In copolymerization, a catalyst may be used. The catalyst may be a phosphorouscatalyst, for example, phosphoric acid, phosphorous acid, hypophosphorous acid, or a salt or derivative thereof. Specifically, the catalyst may include phosphoric acid, phosphorous acid, hypophosphorous acid,sodium hypophosphite, sodium hypophosphate, and sodium hypophosphinate.

The catalyst may be present in an amount of about 3 parts by weight or less, for example about 0.001 parts by weight to about 1 part by weight, specifically about 0.01 parts by weight to about 0.5 parts by weight based on about 100 parts by weight of the monomer mixture, without being limited thereto.

In preparation of the polyamide resin, the end-capping agent may be used in an amount as set forth above, and viscosity of the copolymerized polyamide resin can be adjusted by regulating an amount of the end-capping agent.

The copolymerized polyamide resin according to the present invention may have a melting point ($T_m$) of about 280°C or higher, for example, about 280°C to about 330°C. Within this range, the copolymerized polyamide resin can be highly heat resistant and thus have excellent properties in terms of moldability and heat resistance.

The copolymerized polyamide resin may have a crystallization temperature ($T_c$) of about 240°C to about 300°C, for example, about 245°C to about 280°C. Within this range, it is possible to obtain a copolymerized polyamide resin having high crystallinity.

In addition, the copolymerized polyamide resin may have a glass transition temperature (Tg) of about 70°C to about 120°C, for example, about 75°C to about 115°C. Within this range, the copolymerized polyamide resin can exhibit excellent properties in terms of heat resistance and processability and thus can be appropriately used as a material for electric/electronic components.

The copolymerized polyamide resin may have a gas generation amount (weight loss) of about 8 wt% or less, for example, about 1 wt% to about 7.5 wt%, as measured by thermogravimetric analysis (TGA) after being heated at about 120°C to about 350°C for about 30 minutes. Within this range, it is possible to reduce or prevent blistering during molding of the copolymerized polyamide resin.

The copolymerized polyamide resin may have a moisture absorption rate of about 3% or less, for example, about 2% or less, specifically about 0.5% to about 1.5%, as measured on a specimen treated at about 85°C/85% RH for about 24 hours. The moisture absorption rate may be calculated according to Equation 1 after a specimen having a size of about 90 mm×about 50 mm×about 2 mm (length × width × thickness) is subjected to vacuum drying at about 120°C for about 4 hours, followed by measurement of an initial weight ($W_0$) of the specimen, and the specimen is treated in a thermo-hygrostat at about 85°C/85% RH for 24 hours, followed by measurement of a weight ($W_1$) of the specimen. Within this range, it is possible to reduce or prevent blistering during molding of the copolymerized polyamide resin.

[Equation 1]

$$\text{Moisture absorption rate (\%)} = (\,|W_1 - W_0|/W_0) \times 100$$

wherein $W_0$ is an initial weight of a specimen, and $W_1$ is a weight of the specimen after the specimen is treated at about 85°C/85% RH for 24 hours.

The copolymerized polyamide resin may have an intrinsic viscosity (η) of about 0.5 dL/g about 2.5 dL/g, for

example, about 0.5 dL/g to about 2.0 dL/g, as measured at 25°C using an Ubbelohde viscometer after being dissolved in an about 98% sulfuric acid solution to a concentration of about 0.5 g/dl.

The copolymerized polyamide resin may have a yellow index (YI) of about 5 to about 10, for example about 6 to about 9.5, as measured on a specimen having a size of about 90 mm × about 50 mm × about 2 mm (length × width × thickness) after the specimen is heat-treated in a gear oven at about 250°C for about 10 minutes in accordance with ASTM E313-73.

In addition, the copolymerized polyamide resin may have a weight average molecular weight of about 5,000 g/mol to about 50,000 g/mol, as measured by GPC.

A molded product according to the present invention may be formed of the copolymerized polyamide resin. For example, the polyamide resin may be produced into a material for electric/electronic components requiring high processability and low gas generation (for example, connectors, LED diffuser plates, and the like), without being limited thereto. The molded product can be easily formed by those skilled in the art to which the present invention pertains.

[Mode for Invention]

Next, the present invention will be described in more detail with reference to some examples. It should be understood that these examples are provided for illustration only and are not to be construed in any way as limiting the invention.

## EXAMPLE

### Examples 1 to 5 and Comparative Examples 1 to 5

In amounts as listed in Table 1, a monomer mixture including terephthalic acid (TPA) and adipic acid (AA) as a dicarboxylic acid (diacid), hexamethylene diamine (HMDA) as a diamine, and ε-caprolactam as a cyclic amide; 1.49 parts by mole of benzoic acid as an end-capping agent (based on 100 parts by mole of the dicarboxylic acid and the diamine); and 0.1 parts by weight of sodium hypophosphinate as a catalyst, and 74 parts by weight of water (based on 100 parts by weight of the monomer mixture)were placedin a 1 L auto Clave reactor, followed by purging with nitrogen. After stirring the raw materials at 100°C for 60 minutes, the temperature of the reactor was increased to 250°C for 2 hours, followed by reaction for 3 hours while maintaining the pressure of the reactor at 25 kgf/cm$^2$, and the reactor was decompressed to a pressure of 15 kgf/cm$^2$, followed by reaction for 1 hour and flashing the mixed solution, thereby separating a polyamide pre-copolymer from water. The separated polyamide pre-copolymer (intrinsic viscosity (η): 0.2 dL/g) was introduced into a tumbler-type reactor, followed by solid-state polymerization at 230°C for 24 hours. Then, the reactor was slowly cooled to room temperature, thereby obtaining a copolymerized polyamide resin.

**Table 1**

| Monomer | | Example | | | | | Comparative Example | | | | |
|---|---|---|---|---|---|---|---|---|---|---|---|
| | | 1 | 2 | 3 | 4 | 5 | 1 | 2 | 3 | 4 | 5 |
| Diacid | TPA (mol%) | 100 | 100 | 66.7 | 76.5 | 75 | 100 | 95 | 90 | 65 | 60 |
| | AA (mol%) | - | - | 33.3 | 23.5 | 25 | - | 5 | 10 | 35 | 40 |
| Diamine | HMDA (mol%) | 100 | 100 | 100 | 100 | 100 | 100 | 100 | 100 | 100 | 100 |
| Cyclic amide | ε-caprolactam | 15 | 17.5 | 11.1 | 17.6 | 25 | - | - | - | - | - |
| Mole ratio | Diamine/Diacid | 1.015 | 1.015 | 1.015 | 1.015 | 1.015 | 1.015 | 1.015 | 1.020 | 1.010 | 1.015 |
| * Unit of amount of cyclic amide: Parts by mole based on 100 parts by mole of dicarboxylic acid (diacid) and diamine | | | | | | | | | | | |

## Experimental Example

Polyamide resins prepared in Examples and Comparative Examples were evaluated as to melting point, crystallization temperature, glass transition temperature, intrinsic viscosity, moisture absorption rate, and gas generation amount according to the following methods. Results are shown in Table 2.

<u>Property evaluation</u>

(1) Melting point ($T_m$), crystallization temperature ($T_c$), and glass transition temperature (Tg)(unit: °C): Melting point, crystallization temperature, and glass transition temperature of each of the polyamide resins obtained through solid-state polymerization in Examples and Comparative Examples were measured using a differential scanning calorimeter (DSC). As the DSC, a DSC-Q20 available from TA Instruments was used. 5 to 10 mg of a sample was subjected to vacuum drying at 80°C for 4 hours (at a moisture concentration of 3,000 ppm or less), heated from 30°C to 400°C at a heating rate of 10°C/min under a nitrogen atmosphere, and then left at 400°C for 1 minute, followed by measuring crystallization temperature at the exothermic peak while cooling the sample at a cooling rate of 10°C/min. Then, the sample was left at 30°C for 1 minute, followed by measuring glass transition temperature and melting point at the transition temperature peak and the endothermic peak, respectively, while heating the sample to 400°C at a heating rate of 10°C/min ($2^{nd}$ scan).

(2) Intrinsic viscosity (unit: dL/g): Intrinsic viscosity was measured on a polyamide resin specimen at 25°C using an Ubbelohde viscometer after dissolving the specimen in a 98% sulfuric acid solution to a concentration of 0.5 dL/g.

(3) Moisture absorption rate (unit: %): Moisture absorption rate was calculated according to Equation 1 after a specimen having a size of about 90 mm×about 50 mm×about 2 mm (length × width × thickness) was subjected to vacuum drying at about 120°C for about 4 hours, followed by measurement of an initial weight ($W_0$) of the specimen, and the specimen was treated in a thermo-hygrostat at about 85°C/85% RH for 24 hours, followed by measurement of a weight ($W_1$) of the specimen.Within this range, it is possible to reduce or prevent blistering during molding of the copolymerized polyamide resin.

[Equation 1]

$$\text{Moisture absorption rate (\%)} = (|W_1 - W_0| / W_0) \times 100$$

wherein $W_0$ is an initial weight of a specimen, and $W_1$ is a weight of the specimen after the specimen is treated at about 85°C/85% RH for 24 hours.

(4) Gas generation amount (unit: wt%): Isothermal TGA was performed using a TGA Q500 available from TA Instruments to measure gas generation amount. Specifically, 20 mg of a polyamide resin specimen was placed in a sample pan, which in turn was heated to 120°Cat a heating rate of 10°C/min, followed by drying the specimen while maintaining the temperature of the pan at 120°C for 30 minutes, and the pan was then heated to 350°C at a heating rate of 10°C/min, followed by measuring the amount of generated pyrolytic gas (weight loss of the resin specimen) while maintaining the temperature of the pan at 350°C for 30 minutes.

(5) Yellow Index (YI): Yellow index was measured on a specimen having a size of 90mm × 50mm × 2mm (length × width × thickness) using a colorimeter (CM-2600d, Konica Minolta) after the specimen was heat-treated in a gear oven at 250°C for 10 minutes in accordance with ASTM E313-73.

**Table 2**

| | Example | | | | | Comparative Example | | | | |
|---|---|---|---|---|---|---|---|---|---|---|
| | 1 | 2 | 3 | 4 | 5 | 1 | 2 | 3 | 4 | 5 |
| Melting point (°C) | 316 | 297 | 302 | 305 | 291 | 365 | 352 | 344 | 325 | 304 |
| Crystallization temperature (°C) | 269 | 260 | 260 | 257 | 246 | N/D | N/D | N/D | 296 | 261 |
| Glass transition temperature (°C) | 115 | 109 | 95 | 101 | 96 | N/D | N/D | N/D | 100 | 92 |
| Intrinsic viscosity (dL/g) | 0.78 | 0.85 | 0.91 | 0.88 | 0.79 | 0.81 | 0.87 | 0.76 | 0.84 | 0.88 |
| Moisture absorption rate (%) | 1.2 | 1.2 | 1.3 | 1.4 | 1.3 | N/D | N/D | N/D | 1.6 | 1.7 |
| Gas generation amount (wt%) | 5.1 | 5.7 | 6.8 | 6.5 | 7.1 | N/D | N/D | N/D | 7.6 | 8.5 |
| Yellow index (YI) | 8.5 | 7.5 | 9.4 | 7.9 | 8.2 | N/D | N/D | N/D | 12.3 | 11.6 |

From the results shown in Table 2, it can be seen that the copolymerized polyamide resins according to the present invention (Examples 1 to 5) were crystalline copolymerized polyamide resins having a melting point ($T_m$) of about 280°C to about 330°C and had excellent properties in terms of heat resistance and melt processability. In addition, it can be seen that the copolymerized polyamide resins according to the present inventionhad a low moisture absorption

rate of 1.4% or less, had a gas generation amount of 7.1 wt% or less and thus could reduce gas generation during high-temperature processing, and had a yellow index of 9.4 or less after heat-treatment and thus had excellent discoloration resistance.

It should be understood that various modifications, changes, alterations, and equivalent embodiments can be made by those skilled in the art without departing from the spirit and scope of the present invention.

## Claims

1. A copolymerized polyamide resin, comprising:

   a repeat unit derived from a dicarboxylic acid;
   a repeat unit derived from a diamine; and
   a repeat unit represented by Formula 1,
   wherein the copolymerized polyamide resin has a melting point ($T_m$) of about 280°C to about 330°C.

[Formula 1]

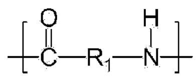

   wherein $R_1$ is a $C_3$ to $C_{12}$ linear, branched, or cyclic alkylene group.

2. The copolymerized polyamide resin according to claim 1, wherein the repeat unit represented by Formula 1 is derived from a cyclic amide compound represented by Formula 2 or an amino acid compound represented by Formula 3.

[Formula 2]

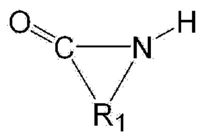

[Formula 3]

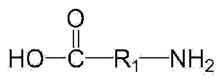

   wherein $R_1$ is the same as defined in Formula 1.

3. The copolymerized polyamide resin according to claim 1, wherein the dicarboxylic acid comprises at least one $C_8$ to $C_{20}$ aromatic dicarboxylic acid.

4. The copolymerized polyamide resin according to claim 3, wherein the dicarboxylic acid comprises about 60 mol% to about 100 mol% of the aromatic dicarboxylic acid and about 40 mol% or less of a $C_6$ to $C_{20}$ aliphatic dicarboxylic acid.

5. The copolymerized polyamide resin according to claim 1, wherein the diamine comprises at least one $C_4$ to $C_{20}$ aliphatic diamine.

6. The copolymerized polyamide resin according to claim 1, wherein the repeat unit represented by Formula 1 is present in an amount of about 5 parts by mole to about 40 parts by mole based on about 100 parts by mole of the repeat unitderived from the dicarboxylic acid and the repeat unit derived from the diamine, and a mole ratio of the repeat unit derived from the diamine to the repeat unit derived from the dicarboxylic acid (diamine/dicarboxylic acid) ranges from about 0.95 to about 1.15.

**7.** The copolymerized polyamide resin according to claim 1, wherein the copolymerized polyamide resin is end-capped with an end-capping agent comprising at least one of an aliphaticcarboxylic acid and an aromatic carboxylic acid.

**8.** The copolymerized polyamide resin according to claim 1, wherein the copolymerized polyamide resin has a crystallization temperature ($T_c$) of about 240°C to about 300°C and a glass transition temperature (Tg) of about 70°C to about 120°C.

**9.** The copolymerized polyamide resin according to claim 1, wherein the copolymerized polyamide resin has an intrinsic viscosity of about 0.5 dL/g to about 2.5 dL/g.

**10.** The copolymerized polyamide resin according to claim 1, wherein the copolymerized polyamide resin has a gas generation amount (weight reduction amount) of about 8 wt% or less, as measured after being heated at about 120°C to about 350°C for about 30 minutes, and a moisture absorption rate of about 3% or less, as calculated according to Equation 1.

[Equation 1]

$$\text{Moisture absorption rate (\%)} = (|W_1 - W_0| / W_0) \times 100$$

wherein $W_0$ is an initial weight of a specimen, and $W_1$ is a weight of the specimen after the specimen is treated at about 85°C/85% RH for about 24 hours.

**11.** A method for preparing a copolymerized polyamide resin, comprising:

polymerizing a monomer mixture comprising a dicarboxylic acid, a diamine, and a cyclic amide compound represented by Formula 2 or an amino acid compound represented by Formula 3,
wherein the copolymerized polyamide resin has a melting point ($T_m$) of about 280°C to about 330°C.

[Formula 2]

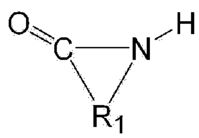

[Formula 3]

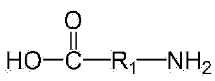

wherein $R_1$ is a $C_3$ to $C_{12}$ linear, branched, or cyclic alkylene group.

**12.** The method for preparing a copolymerized polyamide resin according to claim 11, comprising:

preparing a prepolymer by polymerizing the monomer mixture; and
solid-state polymerizing the prepolymer.

**13.** The method for preparing a copolymerized polyamide resin according to claim 11, wherein the prepolymer has an intrinsic viscosity of about 0.1 dL/g to about 0.3 dL/g.

**14.** The method for preparing a copolymerized polyamide resin according to claim 12, wherein solid-state polymerization of the prepolymer comprises heating the prepolymer to a temperature of about 150°C to about 280°C.

**15.** A molded product formed of the copolymerized polyamide resin according to any one of claims 1 to 10.

## INTERNATIONAL SEARCH REPORT

International application No.

**PCT/KR2014/011779**

A. CLASSIFICATION OF SUBJECT MATTER

***C08G 69/02(2006.01)i, C08G 69/26(2006.01)i, C08G 69/04(2006.01)i, C08G 69/48(2006.01)i***

According to International Patent Classification (IPC) or to both national classification and IPC

B. FIELDS SEARCHED

Minimum documentation searched (classification system followed by classification symbols)

C08G 69/02; C08G 69/36; C08G 69/32; H01L 33/00; C08L 77/00; C08G 69/26; C08L 29/04; C08G 69/04; C08G 69/48

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)

eKOMPASS (KIPO internal) & Keywords: copolymerization, polyamide, dicarboxylic acid, diamine, amino acid, caprolactam, laurolactam, prepolymer, solid state polymerization, end capping agent

C. DOCUMENTS CONSIDERED TO BE RELEVANT

| Category* | Citation of document, with indication, where appropriate, of the relevant passages | Relevant to claim No. |
|---|---|---|
| X | KR 10-1997-0005109 B1 (BASF AKTIENGESELLSCHAFT) 12 April 1997<br>See page 7-1 to page 7-4; examples 1 and 3. | 1-6,8,10-12,14-15 |
| Y | | 7,9,13 |
| Y | KR 10-2012-0040069 A (CHEIL INDUSTRIES INC.) 26 April 2012<br>See paragraphs [0028], [0047]; claims 1, 10. | 7,9,13 |
| A | | 1-6,8,10-12,14-15 |
| A | KR 10-2013-0073773 A (CHEIL INDUSTRIES INC.) 03 July 2013<br>See abstract; and claims 1-17. | 1-15 |
| A | KR 10-2011-0032001 A (E.I. DU PONT DE NEMOURS AND COMPANY) 29 March 2011<br>See abstract; and claims 1-13. | 1-15 |
| A | KR 10-1997-0042683 A (TONGYANG NYLON CO., LTD.) 24 July 1997<br>See abstract; and claims 1-3. | 1-15 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 MARCH 2015 (06.03.2015) | **09 MARCH 2015 (09.03.2015)** |

| Name and mailing address of the ISA/**KR** | Authorized officer |
|---|---|
| Korean Intellectual Property Office<br>Government Complex-Daejeon, 189 Seonsa-ro, Daejeon 302-701, Republic of Korea<br>Facsimile No. 82-42-472-7140 | Telephone No. |

Form PCT/ISA/210 (second sheet) (July 2009)

INTERNATIONAL SEARCH REPORT
Information on patent family members

International application No.
PCT/KR2014/011779

| Patent document cited in search report | Publication date | Patent family member | Publication date |
|---|---|---|---|
| KR 10-1997-0005109 B1 | 12/04/1997 | EP 0299444 A2 | 18/01/1989 |
| | | EP 0299444 A3 | 12/09/1990 |
| | | EP 0299444 B1 | 01/06/1994 |
| | | EP 0299444 B2 | 14/02/2007 |
| | | EP 0350689 A3 | 07/08/1991 |
| | | EP 0350689 B1 | 21/12/1994 |
| | | JP 02-041318 A | 09/02/1990 |
| | | JP 02-127466 A | 16/05/1990 |
| | | JP 02899317 B2 | 02/06/1999 |
| | | JP 02921761 B2 | 19/07/1999 |
| | | JP 10-152555 A | 09/06/1998 |
| | | JP 10-168183 A | 23/06/1998 |
| | | US 4970255 A | 13/11/1990 |
| | | US 5081222 A | 14/01/1992 |
| | | US 5218082 A | 08/06/1993 |
| | | US 5298595 A | 29/03/1994 |
| KR 10-2012-0040069 A | 26/04/2012 | CN 103119083 A | 22/05/2013 |
| | | EP 2631258 A1 | 28/08/2013 |
| | | US 2013-0225770 A1 | 29/08/2013 |
| | | WO 2012-053699 A1 | 26/04/2012 |
| KR 10-2013-0073773 A | 03/07/2013 | WO 2013-094916 A1 | 27/06/2013 |
| KR 10-2011-0032001 A | 29/03/2011 | CA 2725384 A1 | 04/02/2010 |
| | | CA 2726010 A1 | 04/02/2010 |
| | | CN 102112525 A | 29/06/2011 |
| | | CN 102112525 B | 17/07/2013 |
| | | CN 102112526 A | 29/06/2011 |
| | | CN 102112526 B | 27/03/2013 |
| | | CN 102112527 A | 29/06/2011 |
| | | CN 102112527 B | 31/07/2013 |
| | | CN 102112545 A | 29/06/2011 |
| | | CN 102112549 A | 29/06/2011 |
| | | CN 102112549 B | 27/03/2013 |
| | | CN 102112550 A | 29/06/2011 |
| | | CN 102112551 A | 29/06/2011 |
| | | CN 102112551 B | 06/11/2013 |
| | | EP 2307480 A1 | 13/04/2011 |
| | | EP 2307481 A1 | 13/04/2011 |
| | | EP 2307482 A1 | 13/04/2011 |
| | | EP 2307499 A2 | 13/04/2011 |
| | | EP 2307502 A1 | 13/04/2011 |
| | | EP 2307503 A1 | 13/04/2011 |
| | | EP 2307504 A1 | 13/04/2011 |
| | | JP 05475777 B2 | 16/04/2014 |
| | | JP 2011-529986 A | 15/12/2011 |
| | | JP 2011-529987 A | 15/12/2011 |
| | | JP 2011-529988 A | 15/12/2011 |

Form PCT/ISA/210 (patent family annex) (July 2009)

INTERNATIONAL SEARCH REPORT
Information on patent family members

International application No.
PCT/KR2014/011779

| Patent document cited in search report | Publication date | Patent family member | Publication date |
|---|---|---|---|
| | | JP 2011-529989 A | 15/12/2011 |
| | | JP 2011-529990 A | 15/12/2011 |
| | | JP 2011-529991 A | 15/12/2011 |
| | | JP 2011-529993 A | 15/12/2011 |
| | | KR 10-2011-0042091 A | 22/04/2011 |
| | | US 2010-0028580 A1 | 04/02/2010 |
| | | US 2010-0028581 A1 | 04/02/2010 |
| | | US 2010-0029815 A1 | 04/02/2010 |
| | | US 2010-0029819 A1 | 04/02/2010 |
| | | US 2010-0029820 A1 | 04/02/2010 |
| | | US 2010-0029821 A1 | 04/02/2010 |
| | | US 2010-0029837 A1 | 04/02/2010 |
| | | US 2012-0208954 A1 | 16/08/2012 |
| | | US 2013-0053483 A1 | 28/02/2013 |
| | | US 2013-0072608 A1 | 21/03/2013 |
| | | US 8445574 B2 | 21/05/2013 |
| | | US 8445575 B2 | 21/05/2013 |
| | | WO 2010-014785 A1 | 04/02/2010 |
| | | WO 2010-014790 A1 | 04/02/2010 |
| | | WO 2010-014791 A1 | 04/02/2010 |
| | | WO 2010-014795 A1 | 04/02/2010 |
| | | WO 2010-014796 A2 | 04/02/2010 |
| | | WO 2010-014796 A3 | 06/05/2010 |
| | | WO 2010-014801 A1 | 04/02/2010 |
| | | WO 2010-014810 A1 | 04/02/2010 |
| KR 10-1997-0042683 A | 24/07/1997 | NONE | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **ARCHAMER BG ; REINHARD FW ; KLINE GM.** *J Res Natl Bur Stand,* 1951, vol. 4, 391